# EUROPEAN PATENT SPECIFICATION

(11) **EP 3 364 418 B1**
(45) Date of publication and mention of the grant of the patent: **14.04.2021**
(21) Application number: 17157113.6
(22) Date of filing: 21.02.2017
(51) Int. Cl.: G21C 3/60, G21C 3/62

(54) **A SINTERED NUCLEAR FUEL PELLET, A FUEL ROD, A FUEL ASSEMBLY, AND A METHOD OF MANUFACTURING A SINTERED NUCLEAR FUEL PELLET**
GESINTERTES KERNBRENNSTOFFPELLET, KERNBRENNSTAB, KERNBRENNSTABBÜNDEL UND VERFAHREN ZUR HERSTELLUNG EINES GESINTERTEN KERNBRENNSTOFFPELLETS
PASTILLE DE COMBUSTIBLE NUCLÉAIRE FRITTÉE, CRAYON DE COMBUSTIBLE NUCLÉAIRE, ASSEMBLAGE DE COMBUSTIBLE NULÉAIRE ET PROCÉDÉ DE FABRICATION D'UNE PASTILLE DE COMBUSTIBLE NUCLÉAIRE FRITTÉE

(43) Date of publication of application: 22.08.2018
(73) Proprietor: Westinghouse Electric Sweden AB, 721 63 Västerås (SE)
(72) Inventor: MIDDLEBURGH, Simon Charles, 722 33 Västerås (SE); HALLSTADIUS, Lars, 725 92 Västerås (SE); PUIDE, Mattias, 722 20 Västerås (SE)
(74) Representative: Bjerkéns Patentbyrå KB (Stockholm)

(56) References cited:
- WO-A1-2011/051447
- FR-A1- 2 143 137
- US-A- 3 429 295

## Description

### TECHNICAL FIELD OF THE INVENTION

The present invention refers generally to a sintered nuclear fuel pellet suitable for use in nuclear reactors, for instance water cooled reactors, including light water reactors such as Boiling Water reactors BWR and Pressurized Water reactors PWR. The sintered fuel pellet is also suitable for use in the next generation reactors, both fast reactors such as lead-fast reactors, and thermal reactors, such as small modular reactors.

Specifically, the present invention refers to a sintered nuclear fuel pellet according to the preamble of claim 1. The invention also refers to a fuel rod and a fuel assembly for use in a nuclear reactor. Furthermore, the invention refers to a method of manufacturing the sintered nuclear fuel pellet.

### BACKGROUND OF THE INVENTION AND PRIOR ART

The dominant nuclear fuel used today comprises sintered nuclear fuel pellets of uranium dioxide, UO₂. Uranium dioxide is an excellent nuclear fuel having a melting point of 2865 °C. However, there is a demand for improvements in certain respects. An increase of the uranium density, would improve the economy of the fuel. An increase of the thermal conductivity, would improve the in reactor behaviour of the pellet and thus make it more suitable for the next generation reactors, providing attributes that may be amenable to so called accident tolerant fuels, ATF WO 2011/051447 discloses nuclear fuel pellets, wherein a different matrix of aluminum or molybdenum is used, and wherein coated uraniumsilicide particles are dispersed. The coating is made from ZrN or Si and can contain Nb as inhibitor. An uranium dioxide matrix is not addressed.

One problem with some unconventional uranium-containing materials is that they have a higher reactivity with water than UO₂. This creates a need for additional protection of the uranium-containing material from penetration of water, especially in water cooled reactors.

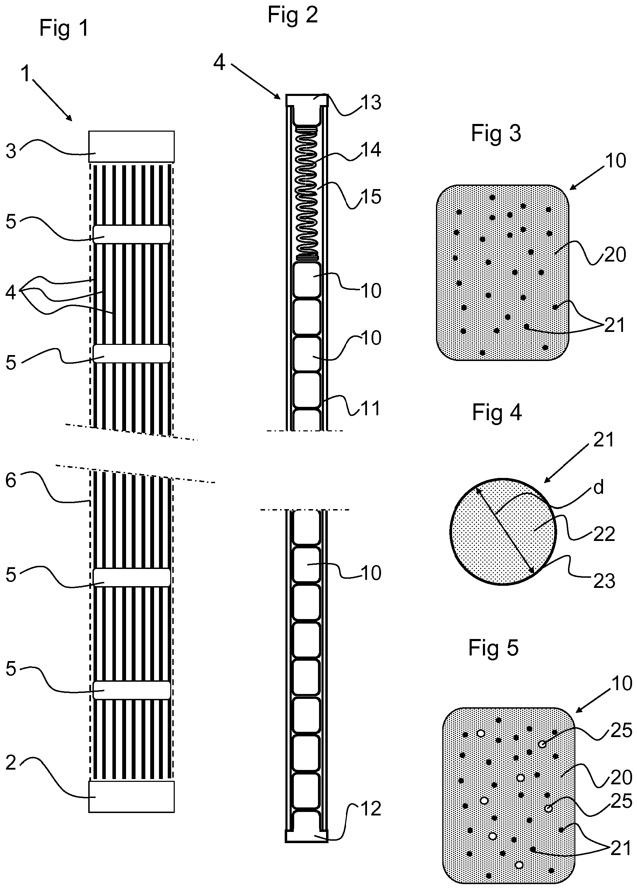

JP-11-202072 refers to nuclear fuels comprising uranium nitride. Fig 1 of this prior art document discloses a particle of uranium nitride which is provided with a coating. The coating could be an oxide film such as aluminum oxide, zirconium oxide or silicon oxide, a carbon coating, such as graphite or film including carbon compounds such as SiC, or a metallic film. Fig 5 of the prior art document discloses a nuclear fuel pellet comprising a matrix of UO₂ and coated UN particles dispersed in the matrix.

Another problem is the rather poor ability to sinter certain uranium-containing materials together with uranium dioxide. These uranium-containing material are not compatible with uranium dioxide in standard sintering furnace conditions, for instance H₂ with H₂O/CO₂.

### SUMMARY OF THE INVENTION

The object of the present invention is to provide an improved nuclear fuel pellet which has a high uranium density and a high thermal conductivity, in particular a higher uranium density and a higher thermal conductivity than conventional uranium dioxide. A further object is to overcome the problems indicated above related to the use of high density uranium-containing materials.

This object is achieved by the sintered nuclear fuel pellet initially defined, which is characterized in that the metallic coating consists of at least one metal chosen from the group of Mo, W, Cr, V and Nb.

By means of these metallic coatings, penetration of aggressive species such as water and other oxidizers (from the sintering furnace or the oxide itself) to the particles may be efficiently prevented. No water can reach the particles and the encapsulated uranium-containing material, also in the case of a defect fuel cladding permitting water or steam to reach the fuel pellet. The metallic coating ensures that the encapsulated uranium-containing material is separated from any contact with the uranium dioxide of the matrix during normal operation of the reactor and in case of a defect fuel rod.

These metals, when applied as a coating on the particles, permit the particles and uranium dioxide powder to be compacted together to a green pellet together with, and the compacted green pellet to be sintered to a nuclear fuel pellet having a proper mechanical strength.

The metallic coating may be formed by a single one of the metals Mo, W, Cr, V and Nb, or an alloy of two or more of these metals, for instance Mo-Cr, Mo-W, Cr-W or Cr-Mo-W. These metals and alloys all have a high melting point.

According to an embodiment of the invention, the at least one metal is atomic layer deposited on the particle.

According to an embodiment of the invention, the at least one metal is electro-plated on the particle.

According to an embodiment of the invention, the at least one metal is deposited on the particle via a sol-gel technique followed by heat treatment

According to an embodiment of the invention, the uranium-containing material comprises at least one of uranium silicide, uranium nitride and uranium boride. These uranium-containing materials may all have a higher uranium density than uranium dioxide, and may thus contribute to improve the fuel economy of the nuclear fuel pellet in comparison with a standard nuclear fuel pellet of uranium dioxide. These uranium-containing materials may also have a higher thermal conductivity than uranium dioxide, and may thus improve the thermal transport efficiency of the nuclear fuel pellet during operation of the reactor in comparison with a standard nuclear fuel pellet of uranium dioxide.

The problem of an increased reactivity with water of the uranium-containing materials in comparison to uranium dioxide is solved in an elegant manner by the metallic coating of particles by at least one of said metals Mo, W, Cr, V and Nb.

According to an embodiment of the invention, the uranium-containing material comprises or consists of at least one of U₃Si₂, USi, U₃Si, U₂₀Si₁₆N₃, UN, and UB₂. All these uranium-containing materials fulfills the above mentioned criteria of a high uranium density and a high thermal conductivity. They all permit a metallic coating of at least one of said metals to be applied to produce an encapsulated particle.

According to an embodiment of the invention, the uranium-containing material comprises at least one of UN and U₂₀Si₁₆N₃, wherein the nitrogen of the uranium-containing material is enriched to contain a higher percentage of the isotope ¹⁵N than natural N, for instance at least 60, 70, 80 or 90% by weight of the isotope ¹⁵N.

According to an embodiment of the invention, the particles also comprises a neutron absorber. Fuel pellets comprising particles with a neutron absorber may advantageously be used, for instance in some of the fuel rods in some of the fuel assemblies of a nuclear reactor, to control the reactivity of the reactor over time, for instance during a fuel cycle.

According to an embodiment of the invention, the neutron absorber comprises ZrB₂. ZrB₂ has an extremely high melting point of 3246°C, and thus could easily survive pellet operation temperatures. For instance, the particles may comprise a mixture of UN and ZrB₂, or a mixture of U₃Si₂ and ZrB₂.

According to an embodiment of the invention, the uranium-containing material comprises UBₓ, especially UB₂, wherein the boron of said UBₓ forms said neutron absorber.

According to an embodiment of the invention, the boron is enriched to contain a higher percentage of the isotope ¹⁰B than natural B, for instance at least 20, 30, 40, 50, 60, 70, 80 or 90% by weight of the isotope ¹⁰B.

According to an embodiment of the invention, the particles have a maximum extension that lies in the range from 100 microns to 2000 microns. The particles could have any shape, for instance a ball shape or spherical shape, wherein the maximum extension is the diameter of the particle.

The object is also achieved by the fuel rod initially defined, which comprises a cladding tube enclosing a plurality of the sintered nuclear fuel pellets.

The object is also achieved by the fuel assembly initially defined, which comprises a plurality of the fuel rods.

The object is also achieved by the manufacturing method initially defined, which comprises the steps of:
providing a powder of an uranium-containing material,
sintering the uranium-containing material to form a plurality of particles,
applying a metallic coating on the particles to form a plurality of coated particles,
providing a powder of uranium dioxide,
mixing the powder of uranium dioxide and the coated particles to provide a mixture,
compressing the mixture to form a green body,
sintering the green body to the sintered nuclear fuel pellet.

The method will result in the sintered nuclear fuel pellet by which the object mentioned above is achieved.

According to an embodiment of the invention, the application step comprises applying the metallic coating on the particles by atomic layer deposition.

According to an embodiment of the invention, the application step comprises applying the metallic coating on the particles by electro-plating.

### BRIEF DESCRIPTION OF THE DRAWINGS

The invention is now to be explained more closed through a description of various embodiments and with reference to the drawings attached hereto.
- Fig 1: discloses schematically a longitudinal sectional view of a fuel assembly for a nuclear reactor.
- Fig 2: discloses schematically a longitudinal sectional view of a fuel rod of the fuel assembly in Fig 1.
- Fig 3: discloses schematically a longitudinal sectional view of a nuclear fuel pellet according to a first embodiment.
- Fig 4: discloses schematically a sectional view of a particle contained in the pellet in Fig 3.
- Fig 5: discloses schematically a longitudinal sectional view of a nuclear fuel pellet according to a second embodiment.

### DETAILED DESCRIPTION OF VARIOUS EMBODIMENTS

Fig. 1 discloses a fuel assembly 1 for use in nuclear reactor, in particular in a water cooled light water reactors, LWR, such as a Boiling Water Reactor, BWR, or a Pressurized Water reactor, PWR. The fuel assembly 1 comprises a bottom member 2, a top member 3 and a plurality of elongated fuel rods 4 extending between the bottom member 2 and the top member 3. The fuel rods 4 are maintained in their positions by means of a plurality of spacers 5. Furthermore, the fuel assembly 1 may, for instance when to be used in a BWR, comprise a flow channel or fuel box indicated by dashed lines 6 and surrounding the fuel rods 4.

Fig 2 discloses one of the fuel rods 4 of the fuel assembly 1 of Fig 1. The fuel rod 4 comprises a nuclear fuel in the form of a plurality of sintered nuclear fuel pellets 10, and a cladding tube 11 enclosing the nuclear fuel pellets 10. The fuel rod 4 comprises a bottom plug 12 sealing a lower end of the cladding tube 11, and a top plug 13 sealing an upper end of the fuel rod 4. The nuclear fuel pellets 10 are arranged in a pile in the cladding tube 11. The cladding tube 11 thus encloses the fuel pellets 10 and a gas. A spring 14 is arranged in an upper plenum 15 between the pile of nuclear fuel pellets 10 and the top plug 13. The spring 14 presses the pile of nuclear fuel pellets 10 against the bottom plug 12.

A first embodiment of one of the nuclear fuel pellets 10 is disclosed more closely in Fig 3. The nuclear fuel pellet 10 comprises a matrix 20 of uranium dioxide, UO₂, and a plurality of particles 21, which are dispersed in the matrix 20, preferably uniformly and randomly.

The number of particles 21 in each nuclear fuel pellet 4 may be very high. The volume ratio particles/matrix may be from a low concentration of particles 21 of about 100 ppm up to the packing fraction.

In Fig 4, the particle 21 has a spherical shape. However, the particle 21 may be a form of any shape.

The size of the particles 21 may vary. Preferably, the particles 21 may have an extension, for instance the diameter d in the spherical example of Fig 4, which lies in the range from 100 microns to 2000 microns.

The particles 21 comprise or consist of a uranium-containing material 22 having a uranium density that is higher than the uranium density of UO₂. In particular, the uranium-containing material 22 comprises or consists of at least one of uranium silicide, uranium nitride and uranium boride.

More specifically, the uranium-containing material 22 comprises or consists of at least one of U₃Si₂, USi, U₃Si, U₂₀Si₁₆N₃, UN and UB₂. The uranium density of each of these uranium-containing materials 22 is higher than 9.7 g/cm³, which is the uranium density of uranium dioxide. Also the thermal conductivity is higher, and generally increases with the temperature.

The uranium-containing material 22 of each particle 21 may thus comprise or consist of a single one of these substances, or a combination of two or more of these substances.

The uranium in the matrix 20 and in the uranium-containing materials 22 can be enriched to contain a higher percentage of the fissile isotope ²³⁵U than natural uranium.

Each of the particles 21 is encapsulated by a metallic coating 23 that completely surrounds and encloses the particle 21. The uranium-containing material 22 is thus completely separated from any contact with the uranium dioxide of the matrix 20.

The metallic coating 23 consists of at least one metal chosen from the group of Mo, W, Cr, V and Nb. These metals ensures of reliable protection of the uranium-containing material 22. They have all a high melting point and will thus survive pellet operation temperatures also in case of an accident, such as a LOCA, Loss Of Coolant Accident. The melting point of Mo is 2622°C, of Cr 1907°C, of W 3414°C, of V 1910°C, and of Nb 2477°C.

The metallic coating 23 may be formed by a single one of the metals Mo, W, Cr, V and Nb. The metallic coating 23 may also be formed by an alloy of two or more of these metals. Preferred alloys are Mo-Cr, Mo-W, Cr-W or Cr-Mo-W.

The thickness of the metallic coating 23 is preferably thin, for instance in the order of less than one micron.

The metallic coating 23 may as mentioned above cover the whole outer surface of the uranium-containing material 22.

The metallic coating 23 may be electro-plated, atomic layer deposited, or deposited by means of a sol-gel technique.

The particles 21 may also comprise a neutron absorber. The neutron absorber may comprise or consists of ZrB₂. Each or some of the particles 21 may then comprise a mixture of at least one of the uranium-containing materials 20 and the neutron absorber, for instance UN/ZrB₂, U₃Si₂/ZrB₂, USi/ZrB₂, U₂₀Si₁₆N₃/ZrB₂ and U₃Si/ZrB₂.

The uranium-containing material 22 of the particles 21 may also comprise UBₓ, especially UB₂ as mentioned above, wherein the boron of UBₓ forms the neutron absorber. Other uranium boride compounds are possible, for instance UB₄, UB₁₂, etc. The uranium boride may then be mixed with at least one of the above-mentioned compounds U₃Si₂, USi, U₃Si, U₂₀Si₁₆N₃ and UN in any suitable proportion to ensure that the uranium density of the uranium-containing material is higher than for uranium dioxide.

Fig 5 discloses a second embodiment according to which the sintered nuclear fuel pellet 10 comprises uranium-containing particles 21 and absorbing particles 25, wherein the absorbing particles 25 comprises or consists of a neutron absorber. The neutron absorber may also in this case comprise or consist of ZrB₂.

In the examples above, the neutron absorber comprises boron, which then may be enriched to contain a higher percentage of the isotope ¹⁰B than natural boron. For instance, the percentage may be at least 20, 30, 40, 50, 60, 70, 80 or 90% by weight of the isotope ¹⁰B.

As mentioned above, the uranium-containing material 22 may comprise of consist of at least one of UN and U₂₀Si₁₆N₃. In these examples, the nitrogen of the uranium-containing material 22 may be enriched to contain a higher percentage of the isotope ¹⁵N than natural N. For instance, the percentage may be at least 60, 70, 80 or 90% by weight of the isotope ¹⁵N.

The metallic coating 22 permits the nuclear fuel pellet 10 to be sintered in a standard sintering furnace by means of the following steps.

A powder of the uranium-containing material is provided. The powder may be formed to green particles. The green particles of the uranium-containing material are then sintered to form a plurality of the particles.

Thereafter, the metallic coating 23 is applied on the particles 21 to form a plurality of coated particles 23. The application of the metallic coating 23 may be performed by means of atomic layer deposition.

Alternatively, the application of the metallic coating 23 may be performed by means of electro-plating.

According to a still further alternative, the application of the metallic coating 23 may be performed by means of a sol-gel method, wherein a gel, in which the metal is impregnated, is applied to the particle 21. A heat treatment is then applied to burn off the gel and leave the metallic coating 23 in the particle 21.

Furthermore, a powder of uranium dioxide is provided.

The powder of uranium dioxide and the coated particles are mixed to provide a mixture. The mixture is then compressed in a suitable mold to form a green body.

Finally, the green body is sintered in the sintering furnace in a suitable atmosphere to the sintered nuclear fuel pellet 10.

The invention is not limited to the embodiments and examples described above, but may be varied and modified within the scope of the following claims.

## Claims

1. A sintered nuclear fuel pellet (10), comprising a matrix (20) of UO₂ and particles (21) dispersed in the matrix,
wherein the particles (21) comprise a uranium-containing material (22),
wherein each of the particles (21) is encapsulated by a metallic coating (23),
wherein the uranium-containing material (22) has a uranium density that is higher than the uranium density of UO₂, **characterized in that** the metallic coating (23) consists of at least one metal chosen from the group of Mo, W, Cr, V and Nb.

2. The sintered nuclear fuel pellet (10) according to claim 1, wherein the uranium-containing material (22) comprises at least one of uranium silicide, uranium nitride and uranium boride.

3. The sintered nuclear fuel pellet (10) according to any one of claims 1 and 2, wherein the uranium-containing material (22) comprises at least one of U₃Si₂, USi, U₃Si, U₂₀Si₁₆N₃, UN and UB₂.

4. The sintered nuclear fuel pellet (10) according to any one of the preceding claims, wherein the uranium-containing material (22) comprises and at least one of UN and U₂₀Si₁₆N₃ and wherein the nitrogen of the uranium-containing material (22) is enriched to contain a higher percentage of the isotope ¹⁵N than natural N.

5. The sintered nuclear fuel pellet (10) according to any one of the preceding claims, wherein the particles (21) also comprises a neutron absorber.

6. The sintered nuclear fuel pellet (10) according to any one of the preceding claims, wherein the sintered nuclear fuel pellet (10) comprises absorbing particles (25) comprising a neutron absorber.

7. The sintered nuclear fuel pellet (10) according to any one of claims 5 and 6, wherein the neutron absorber comprises ZrB₂.

8. The sintered nuclear fuel pellet (10) according to any one of claims 5 to 7, wherein the uranium-containing material (22) comprises UBₓ, especially UB₂, and wherein the boron of said UBₓ forms the neutron absorber.

9. The sintered nuclear fuel pellet (10) according to any one of claims 7 and 8, wherein the boron is enriched to contain a higher percentage of the isotope ¹⁰B than natural boron.

10. The sintered nuclear fuel pellet (10) according to any one of the preceding claim, wherein the particles (21) have an extension that lies in the range from 100 microns to 2000 microns.

11. A fuel rod (4) comprising a cladding tube (11) enclosing a plurality of sintered nuclear fuel pellets (10) according to any one of the preceding claims.

12. A fuel assembly (1) for use in a nuclear reactor, comprising a plurality of fuel rods (4) according to claim 11.

13. A method of manufacturing a sintered nuclear fuel pellet according to any one of claims 1 to 10, the method comprising the steps of:
providing a powder of an uranium-containing material,
sintering the uranium-containing material to form a plurality of particles,
applying a metallic coating on the particles to form a plurality of coated particles,
providing a powder of uranium dioxide,
mixing the powder of uranium dioxide and the coated particles to provide a mixture,
compressing the mixture to form a green body,
sintering the green body to the sintered nuclear fuel pellet.

14. The method of claim 13, wherein the application step comprises applying the metallic coating on the particles by atomic layer deposition.

15. The method of claim 14, wherein the application step comprises applying the metallic coating on the particles by electro-plating.

## Patentansprüche

1. Gesintertes Kernbrennstoffpellet (10), umfassend eine Matrix (20) aus UO₂ und in der Matrix dispergierte Partikel (21),
wobei die Partikel (21) ein uranhaltiges Material (22) umfassen,
wobei jedes der Partikel (21) durch eine metallische Beschichtung (23) eingekapselt ist,
wobei das uranhaltige Material (22) eine Uran-Dichte aufweist, die höher ist als die Uran-Dichte von UO₂
**dadurch gekennzeichnet, dass** die metallische Beschichtung (23) aus mindestens einem Metall besteht, das aus der Gruppe von Mo, W, Cr, V und Nb ausgewählt ist.

2. Gesintertes Kernbrennstoffpellet (10) nach Anspruch 1, wobei das uranhaltige Material (22) mindestens eines von Uransilicid, Urannitrid und Uranborid umfasst.

3. Gesintertes Kernbrennstoffpellet (10) nach einem der Ansprüche 1 und 2, wobei das uranhaltige Material (22) mindestens eines von U₃Si₂, USi, U₃Si, U₂₀Si₁₆N₃, UN und UB₂ umfasst.

4. Gesintertes Kernbrennstoffpellet (10) nach einem der vorhergehenden Ansprüche, wobei das uranhaltige Material (22) mindestens eines von UN und U₂₀Si₁₆N₃ umfasst und wobei der Stickstoff des uranhaltigen Materials (22) so angereichert ist, dass er einen höheren Prozentsatz des Isotops ¹⁵N als natürlicher N enthält.

5. Gesintertes Kernbrennstoffpellet (10) nach einem der vorhergehenden Ansprüche, wobei die Partikel (21) außerdem einen Neutronenabsorber umfassen.

6. Gesintertes Kernbrennstoffpellet (10) nach einem der vorhergehenden Ansprüche, wobei das gesinterte Kernbrennstoffpellet (10) absorbierende Partikel (25) umfasst, die einen Neutronenabsorber umfassen.

7. Gesintertes Kernbrennstoffpellet (10) nach einem der Ansprüche 5 und 6, wobei der Neutronenabsorber ZrB₂ umfasst.

8. Gesintertes Kernbrennstoffpellet (10) nach einem der Ansprüche 5 bis 7, wobei das uranhaltige Material (22) UBₓ, insbesondere UB₂, umfasst und wobei das Bor des UBₓ den Neutronenabsorber bildet.

9. Gesintertes Kernbrennstoffpellet (10) nach einem der Ansprüche 7 und 8, wobei das Bor so angereichert ist, dass es einen höheren Prozentsatz des Isotops ¹⁰B enthält als natürliches Bor.

10. Gesintertes Kernbrennstoffpellet (10) nach einem der vorhergehenden Ansprüche, wobei die Partikel (21) eine Ausdehnung besitzen, die im Bereich von 100 Mikron bis 2000 Mikron liegt.

11. Kernbrennstab (4), umfassend ein Hüllrohr (11), das eine Vielzahl von gesinterten Kernbrennstoffpellets (10) nach einem der vorhergehenden Ansprüche umschließt.

12. Kernbrennstabbündel (1) zur Verwendung in einem Kernreaktor, umfassend eine Vielzahl von Kernbrennstäben (4) nach Anspruch 11.

13. Verfahren zur Herstellung eines gesinterten Kernbrennstoffpellets nach einem der Ansprüche 1 bis 10, wobei das Verfahren die folgenden Schritte umfasst:
Bereitstellen eines Pulvers aus einem uranhaltigen Material,
Sintern des uranhaltigen Materials, eine Vielzahl von Partikeln zu bilden,
Aufbringen einer metallischen Beschichtung auf die Partikel, um eine Vielzahl von beschichteten Partikeln zu bilden,
Bereitstellen eines Pulvers aus Urandioxid,
Mischen des Pulvers aus Urandioxid und der beschichteten Partikel, um eine Mischung bereitzustellen,
Pressen der Mischung, um einen Grünkörper zu formen,
Sintern des Grünkörpers zum gesinterten Kernbrennstoffpellet.

14. Verfahren nach Anspruch 13, wobei der Schritt des Aufbringens das Aufbringen der metallischen Beschichtung auf die Partikel durch Atomlagenabscheidung umfasst.

15. Verfahren nach Anspruch 14, wobei der Schritt des Aufbringens das Aufbringen der metallischen Beschichtung auf die Partikel durch Elektroplattieren umfasst.

## Revendications

1. Pastille de combustible nucléaire frittée (10), comprenant une matrice (20) d'UO₂ et des particules (21) dispersées dans la matrice,
dans laquelle les particules (21) comprennent un matériau contenant de l'uranium (22),
dans laquelle chacune des particules (21) est encapsulée par un revêtement métallique (23),
dans laquelle le matériau contenant de l'uranium (22) a une densité d'uranium supérieure à la densité d'uranium d'UO₂,
**caractérisée en ce que** le revêtement métallique (23) est constitué d'au moins un métal choisi dans le groupe comprenant Mo, W, Cr, V et Nb.

2. Pastille de combustible nucléaire frittée (10) selon la revendication 1, dans laquelle le matériau contenant de l'uranium (22) comprend au moins un parmi du siliciure d'uranium, du nitrure d'uranium et du borure d'uranium.

3. Pastille de combustible nucléaire fritté (10) selon l'une quelconque des revendications 1 et 2, dans laquelle le matériau contenant de l'uranium (22) comprend au moins un parmi U₃Si₂, USi, U₃Si, U₂₀Si₁₆N₃, UN et UB₂.

4. Pastille de combustible nucléaire frittée (10) selon l'une quelconque des revendications précédentes, dans laquelle le matériau contenant de l'uranium (22) comprend au moins l'un de UN et U₂₀Si₁₆N₃ et dans laquelle l'azote du matériau contenant de l'uranium (22) est enrichi pour contenir un pourcentage plus élevé de l'isotope ¹⁵N que N naturel.

5. Pastille de combustible nucléaire frittée (10) selon l'une quelconque des revendications précédentes, dans laquelle les particules (21) comprennent également un absorbeur de neutrons.

6. Pastille de combustible nucléaire frittée (10) selon l'une quelconque des revendications précédentes, dans laquelle la pastille de combustible nucléaire frittée (10) comprend des particules absorbantes (25) comprenant un absorbeur de neutrons.

7. Pastille de combustible nucléaire frittée (10) selon l'une quelconque des revendications 5 et 6, dans laquelle l'absorbeur de neutrons comprend ZrB₂.

8. Pastille de combustible nucléaire frittée (10) selon l'une quelconque des revendications 5 à 7, dans laquelle le matériau contenant de l'uranium (22) comprend UBₓ, en particulier UB₂, et dans laquelle le bore dudit UBₓ forme l'absorbeur de neutrons.

9. Pastille de combustible nucléaire frittée (10) selon l'une quelconque des revendications 7 et 8, dans laquelle le bore est enrichi pour contenir un pourcentage plus élevé de l'isotope ¹⁰B que le bore naturel.

10. Pastille de combustible nucléaire frittée (10) selon l'une quelconque des revendications précédentes, dans laquelle les particules (21) ont une extension qui se situe dans la plage de 100 microns à 2000 microns.

11. Barre de combustible (4) comprenant un tube de gainage (11) enfermant une pluralité de pastilles de combustible nucléaire frittées (10) selon l'une quelconque des revendications précédentes.

12. Ensemble de combustible (1) destiné à être utilisé dans un réacteur nucléaire, comprenant une pluralité de barres de combustible (4) selon la revendication 11.

13. Procédé de fabrication d'une pastille de combustible nucléaire frittée selon l'une quelconque des revendications 1 à 10, le procédé comprenant les étapes consistant à :
fournir une poudre d'un matériau contenant de l'uranium,
fritter le matériau contenant de l'uranium pour former une pluralité de particules,
appliquer un revêtement métallique sur les particules pour former une pluralité de particules revêtues,
fournir une poudre de dioxyde d'uranium,
mélanger la poudre de dioxyde d'uranium et les particules revêtues pour fournir un mélange,
comprimer le mélange pour former un corps vert,
fritter le corps vert en la pastille de combustible nucléaire frittée.

14. Procédé selon la revendication 13, dans lequel l'étape d'application comprend l'application du revêtement métallique sur les particules par dépôt de couche atomique.

15. Procédé selon la revendication 14, dans lequel l'étape d'application comprend l'application du revêtement métallique sur les particules par électrodéposition.
